(19) Europäisches Patentamt
European Patent Office
Office européen des brevets

(11) **EP 2 138 514 A1**

(12) **EUROPEAN PATENT APPLICATION**
published in accordance with Art. 153(4) EPC

(43) Date of publication:
**30.12.2009 Bulletin 2009/53**

(51) Int Cl.:
**C08B 30/12** (2006.01)  **A23L 1/30** (2006.01)
**C08B 30/20** (2006.01)

(21) Application number: **08764123.9**

(22) Date of filing: **13.06.2008**

(86) International application number:
**PCT/JP2008/001528**

(87) International publication number:
**WO 2008/155892 (24.12.2008 Gazette 2008/52)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **21.06.2007 JP 2007164019**

(71) Applicants:
• **J-Oil Mills, Inc.**
  **Tokyo 104-0044 (JP)**
• **Osaka Prefecture University Public Corporation**
  **Osaka 599-8231 (JP)**

(72) Inventors:
• **YAMAKU, Keiko**
  **Tokyo 104-0044 (JP)**
• **GOTO, Masaru**
  **Tokyo 104-0044 (JP)**
• **ISOBE, Yosuke**
  **Tokyo 104-0044 (JP)**
• **YOSHIDA, Hiroyuki**
  **Sakai-shi**
  **Osaka 599-8231 (JP)**

(74) Representative: **Hellmich, Wolfgang**
  **Lortzingstrasse 9**
  **81241 München (DE)**

(54) **METHOD OF PRODUCING STARCH HAVING HIGH LESS DIGESTIBLE STARCH CONTENT**

(57) It is intended to provide a method of easily and economically producing starch which has an increased content of less digestible starch. The method of producing starch having a high content of less digestible starch is **characterized by** comprising contacting starch with hot water at a temperature of 160 to 260°C which has a pressure corresponding to the saturated vapor pressure at that temperature or more.

Fig.6

**Description**

*BACKGROUND OF THE INVENTION*

**Field of the Invention**

The present invention relates to a method of producing starch composition having a high content of less digestible starch, particularly a method of easily and economically producing such the starch composition.

Related Art

Now that colon cancer ranks high in causes of death of Japanese, it is generally recommended to intake much dietary fiber being less digestible in the human small intestine. It was found in 1980s that there exists starch being less digestible in the human small intestine, such as dietary fiber. Such the starch is called less digestible starch or resistant starch. Even though the less digestible starch is not digested nor absorbed in the small intestine, it is fermented and decomposed in the large intestine by intestinal bacteria normally living there. Short-chain fatty acid, particularly butyric acid, which is produced by fermentation, acidizes inside of the large intestine and has an effect of keeping the intestine environment fit.

The less digestible starch also has an effect of lowering cholesterol and triglyceride in the liver and the blood. Therefore, it is significant to intake much food containing the less digestible starch for such the purposes and preventing occurrence of the colon cancer.

The less digestible starch content (also referred to as "RS content" hereinafter) in the starch depends on derivation of the starch. For example, the content of high-amylose cornstarch is 20% or more, potato starch about 10%, and flour starch 5% or less. Because a daily allowable intake amount of these starches for human beings is limited, a high RS content in the starch is desirable.

Researches are carried out on increasing the dietary fiber and/or less digestible starch content in the starch by process treatment of the starch. Japanese Unexamined Patent Publication No. H10-195105 (Method of producing starch material having a high dietary fiber content, Patent Document 1) describes a method of producing starch material having a high dietary fiber content, comprising a step of putting starch having an amylose content of 30% or more by weight in a pressure-resistant container which has both a decompression line and a pressurized steam line, and a step of applying a pressure and heat by introduction of steam after decompression. A total dietary fiber content (TDF) is evaluated by Prosky official method.

It is now under discussion whether or not less digestible starch is regarded as dietary fiber (Non-patent Documents 1 and 2). Recently, an AOAC official method 2002.02 has been recognized as a method of directly measuring an RS content in starch. Therefore, the RS content in the high-amylose starch which has been heat-moisture treated by employing the above-described conventional technology is reevaluated by the AOAC official method 2002.02. Based on this reevaluation, it is found that the RS content is not substantially increased.

The above-described conventional technology is a so-called "heat-moisture treatment" where high-amylose cornstarch is heated at high temperature under low moisture condition. The heat-moisture treatment is disadvantageous in terms of cost because it requires industrially large scale mechanism for a batch treatment.

Japanese Unexamined Patent Publication No. H09-012601 (Method of producing amylase resistant granular starch, Patent Document 2) describes a method of producing resistant granular starch where high-amylose starch having a total moisture content of 10 to 80% by weight is heated at temperature of 60 to 160°C based on an amylose content of at least 40% by weight and a weight of mixture of starch and water. According to this invention, it is possible to produce starch having a total dietary fiber content of at least 12%. This invention is also intended to increase the total dietary fiber content in the starch as well as Patent Document 1.

Japanese Unexamined Patent Publication No. 2006-320325 (Producing Process and usage of flour composition having increased total dietary fiber, Patent Document 3) describes flour composition which is prepared by heating high-amylose flour having a total moisture content of approximately 10 to 50% by weight at a temperature of approximately 80 to 160°C for approximately 0.5 to 15 minutes with a target temperature. According to this invention, it is possible to increase the total dietary fiber (TDF) content by hot-water treating the high-amylose flour for short time. This invention is also intended to increase the total dietary fiber content in the starch as well as Patent Documents 1 and 2.

Published Japanese Translation of a PCT Application No. H08-503123 (High-amylose starch and resistant starch fraction, Patent Document 4) describes a dietary fiber including high-amylose starch derived from corn which is obtained by fractionating high-amylose starch having amylose content of 85% or more based on grain size and/or starch fraction of increased resistance starch content. An invention of Patent Document 4 is provided to remove easy digestible starch from high-amylose cornstarch being an ingredient. The obtained rate of less digestible starch is as low as about 36% at maximum. Further, yield becomes extremely low because starch of as high as about 47% should be removed to obtain such the rate.

Non-patent Document 1: Kenichiro Kanaya, Requirement for analyzing dietary fiber, Journal of Japanese Association for Dietary Fiber Research, Vol. 10, No. 2, 2006, p113-114

Non-patent Document 2: Science of Dietary Fiber, p.148-149 (ed. by Keisuke Tsuji, published by Asakura Shoten)

Patent Document 1: Japanese Unexamined Patent Publication No. H10-195105

Patent Document 2: Japanese Unexamined Patent Publication No. H09-012601

Patent Document 3: Japanese Unexamined Patent Publication No. 2006-320325

Patent Document 4: Japanese Unexamined Patent Publication No. H08-503123

## SUMMARY OF THE INVENTION

Therefore, it is an object of the present invention to provide a method of easily and economically producing starch having a high content of less digestible starch.

In deep consideration of the above-described object, the inventors found that unexpectedly, there exist conditions of efficiently transforming into less digestible starch when amylose content starch is hot-water treated and they reached the present invention.

Therefore, the present invention provides a method of producing starch having a high content of less digestible starch comprising contacting amylose content starch with hot water at a temperature of 160 to 260°C which has a pressure corresponding to a saturated vapor pressure at that temperature or more.

The less digestible starch content in the starch having processed by the producing method of the present invention is measured by an AOAC official method 2002.02.

An ingredient used in the producing method of the present invention is preferably high-amylose cornstarch. In this specification, "high-amylose cornstarch" means a cornstarch having an amylose content which is 40% by weight of the total starch.

Further, the amylose content of the high-amylose cornstarch is preferably 50 to 85% by weight.

According to the producing method of the present invention, the hot-water treatment is preferably carried out for 0.1 to 60 minutes at a temperature of 170 to 230°C.

Further, the hot-water treatment is preferably carried out not in a powder state but in a slurry state. Specifically, it is preferably carried out at moisture of 50% or more on starch dry weight. In this specification, moisture means moisture on dry starch base (dry starch base %).

It is found that in the starch having the increased content of less digestible starch which is obtained according to the producing method of the present invention, a crystallization degree is increased compared with the ingredient starch and the conventional heat-moisture treated products. Such the starch is novel one. Therefore, the present invention also provides a starch having an increased content of less digestible starch and an increased crystallization degree more than those of the ingredient starch, which is obtained by the above-described producing method.

Specifically, the less digestible starch content is 50 to 70% by weight of a total starch amount and the crystallization degree is 12 to 30%.

The starch having the increased crystallization degree and the increased content of less digestible starch is nearly spherical, specifically a rate of those having a ratio of 2.0 or more between a short diameter and a long diameter is ordinarily 5% or less in terms of number average.

The present invention also provides food mixed with the starch having the increased crystallization degree and the increased content of less digestible starch which is obtained according to the producing method of the present invention.

Japanese Unexamined Patent Publication No. 2005-87987 describes a method of producing less digestible dextrin from potato waste using a steam blasting device. Despite rich starch in the potato ingredient, the producing method of Japanese Unexamined Patent Publication No. 2005-87987 is different in reaction condition from that of the present invention. Therefore, product obtained according to Japanese Unexamined Patent Publication No. 2005-87987 is low-molecular hydro-soluble dextrin and it is absolutely different from the starch having an increased RS content which is obtained according to the producing method of the present invention.

According to the present invention, for example, if high-amylose cornstarch is used for ingredient, it is possible to increase the RS content by 40% by weight to 70% by weight or more from the initial content, depending conditions. Further, according to the producing method of the present invention, processes are easier and more suitable for continuous treatment and it is possible to make production costs more reasonable, compared with conventional methods.

**BRIEF DESCRIPTION OF THE DRAINING**

FIG. 1 is a schematic view showing an embodiment of a continuous reaction apparatus used in a producing method of the present invention.

FIG. 2 is a schematic view showing an embodiment of a batch-type reaction apparatus used in the producing method of the present invention.

FIG. 3 is a micrograph (drawing substitute photograph) of starch-ingredient high-amylose cornstarch (HAS) which is used for the Examples.

FIG. 4 is a long diameter/short diameter distribution chart of the HAS of FIG. 3.

FIG. 5 is an X-ray diffraction diagram of the HAS of the FIG. 3.

FIG. 6 is a micrograph (drawing substitute photograph) of hot-water treated product of Example 5.

FIG. 7 is a long diameter/short diameter distribution chart of the hot-water treated product of Example 5.

FIG. 8 is an X-ray diffraction diagram of the hot-water treated product of Example 5.

FIG. 9 is an X-ray diffraction diagram of a conventional heat-moisture treated product (Product name: LODESTAR).

FIG. 10 is a graph showing a GPC measurement result of the HAS, the hot-water treated product of Example 5 and the conventional heat-moisture treated product (LODESTAR).

FIG. 11 is a graph showing a DSC measurement result of the HAS, the hot-water treated product of Example 5 and the conventional heat-moisture treated product (LODESTAR).

**DESCRIPTION OF THE PREFERRED EMBODIMENTS**

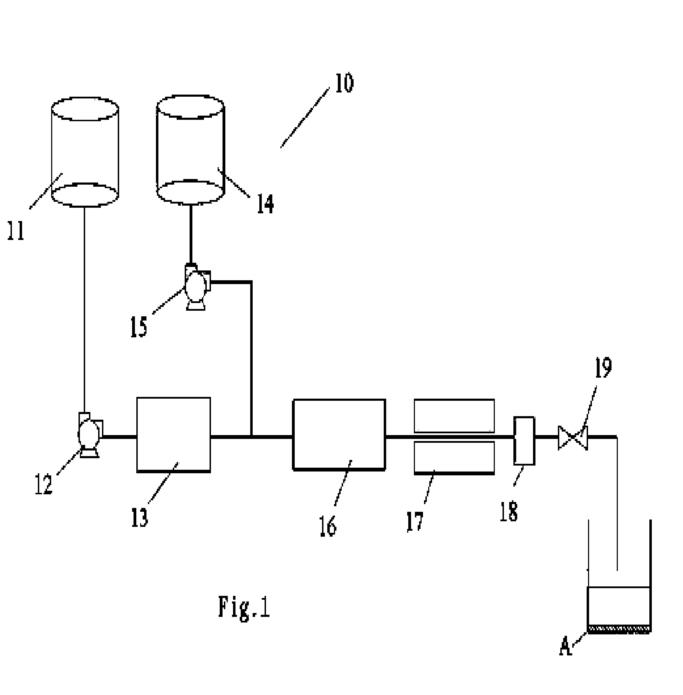

Hereinafter, one embodiment of the present invention is explained in reference to attached drawings. FIG. 1 shows a continuous hot-water treatment apparatus. After being pressure-raised into a predetermined pressure by a water pump 12, water in a water tank 11 is heated by a heater 13 to produce hot water having a predetermined temperature. Starch as an ingredient is mixed with purified water and formed into a state of solution or slurry liquid, and subsequently fed into an ingredient tank 14. Next, the ingredient is pressure-raised by a slurry pump 15, and ingredient slurry is mixed with hot water and passed through a heat/pressure resistant pipe 16. Subsequently, it is cooled into an ordinary temperature by a cooler 17, aggregation is removed by a filter 18, and treated water is collected into a container through a back pressure valve 19. It is returned into an ordinary pressure and deposit is collected as starch.

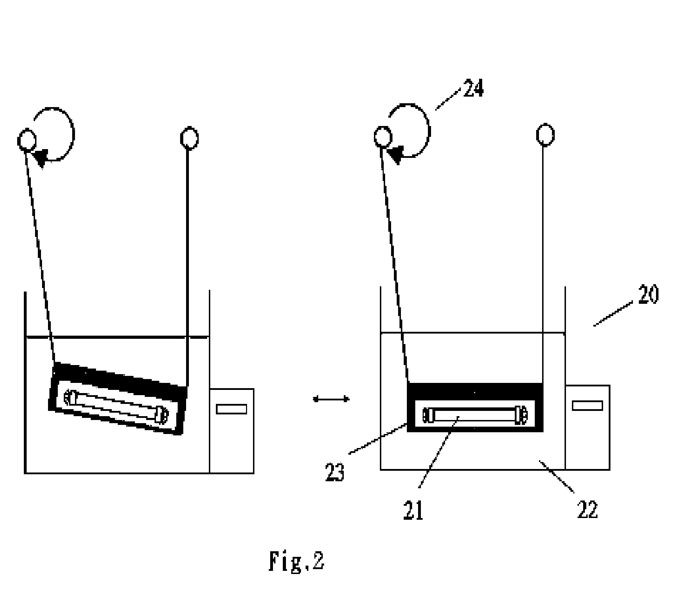

FIG. 2 shows a batch-type reaction apparatus. The apparatus includes: a pressure/heat resistant pipe 21 which is capable of opening and closing and made of corrosion-resistant material, for example, shown stainless steal; a constant-temperature apparatus such as a salt bath 22 at hot water temperature; a mechanism for uniforming contents of the reaction container such as an agitator 24 and a reaction pipe oscillation apparatus; and others. The reaction pipe is contained with starch and purified water and closed, and heated to a predetermined temperature. When temperature and pressure inside the reaction pipe become high, water inside the reaction pipe becomes hot and the fed ingredient is hot-water treated.

The starch as an ingredient to be fed into the reaction apparatus of the continuous type and the batch type is not limited as long as amylose is contained. Therefore, a waxy cornstarch containing no amylose and a starch having low amylose content are not suitable for ingredient of the present processing method. The starch used in the present invention may be modified or unmodified.

Specific examples of the starch containing amylose are cornstarch, wheat starch, rice starch, mung bean starch, potato starch, sweet potato starch, tapioca starch, sago starch, kudzu starch, banana starch and others. Among these, the cornstarch which has considerably high amylose content is preferable.

Further, among the cornstarches, a high-amylose cornstarch which has especially high amylose content is the best ingredient for increasing RS content. An amylose content of the high-amylose cornstarch is, ordinarily 40 to 90% by weight, preferably 50 to 85% by weight, to a total amount of starch.

The ingredient starch and purified water are fed into the reaction apparatus. Or the ingredient is suspended in the purified water and subsequently fed into the reaction apparatus. It is preferable that total amount of the starch in the reaction is uniformly dispersed in a water phase or in a state of slurry. For that purpose, moisture in the hot-water reaction is ordinarily 50 to 98% and preferably 60 to 95%. In the case of moisture of 50% or less, fluidity of the slurry decreases and ununiformity increases inside the reaction apparatus, so that there are possibilities of locally insufficient reaction and carbonization because a thermal decomposition reaction proceeds too fast. On the contrary, in the case of 98% or more, it is not economical because losses and wastewater amount increase during the collection of starch after the reaction.

A reaction temperature is 160 to 260°C, preferably 170 to 230°C. In the case of temperature of 160°C or less, reaction time increases and it is not industrially appropriate. On the contrary, in the case of 260°C or more, there are possibilities of generation of organic acid or carbonization because the thermal decomposition reaction proceeds too fast in short time. Further, because the reaction apparatus becomes easily corrosive due to high temperature and high pressure, the reaction container requires higher pressure resistance.

A reaction pressure is a pressure corresponding to the saturated vapor pressure at the reaction temperature or more, preferably in a range of 0 to 22Mpa higher than the saturated vapor pressure at the reaction temperature. Therefore, water inside the reaction container is substantially in a state of water phase (liquid phase).

Although a reaction time is appropriately adjusted depending on the reaction temperature, it is ordinarily 0.1 to 120 minutes, preferably 0.1 to 60 minutes. When the reaction temperature is 170°C, the reaction time is 5 to 60 minutes and when the reaction temperature is 230°C, it is 0.1 to 2 minutes.

After the reaction, the content is rapidly cooled into ordinary temperature. After the pressure is returned to an ordinary pressure, deposit or suspension inside the apparatus is collected. The collection method is not specifically limited. After being collected by spontaneous sedimentation, centrifugal separation, filtration, filter press, or the like, the deposit may be dried by a method such as ventilation, decompression, fluid bed, air current, atomization, or the like. Further when coagulation is found, it may be smashed, granulated, and sieved. In the case of rigid gel state, it may be left evaporated and dried, and then washed to remove soluble component. In such way, the starch having high RS content is obtained.

According to the present producing method, it is possible to increase an RS content to 1.1 to 2 times, particularly 1.2 to 1.6 times of the initial content while maintaining a starch yield. Specifically, RS content of the starch obtained by the present producing method which is measured by an AOAC official method 2002.02 is ordinarily 40 to 75% by weight, particularly 50 to 70% by weight.

According to the producing method of the present invention, a reaction temperature and moisture are high comparing with the conventional heat-moisture producing method. Starch obtained by the present producing method is different in property from the existing amylose content starch and heat-moisture treated products as well as increased RS content.

Specifically, the starch obtained according to the producing method of the present invention is nearly spherical (ratio between short diameter and long diameter: 1.0 to 1.1). Particularly, corded grain (ratio between short diameter and long diameter: 2.0 or more) characteristic of the high-amylose cornstarch are barely found and grains become relatively uniform. Specifically, a percentage of those having a ratio between short diameter and long diameter is 2.0 or more is ordinarily 5% or less, particularly 1 % or less in terms of number average.

The starch obtained according to the producing method of the present invention increases crystallization degree more than that of the ingredient. Although crystallization degree of the high-amylose cornstarch in the pretreatment state is 11.4%, it increases to ordinarily 12 to 30%, particularly 18 to 20% when the producing method of the present invention is applied.

The above-described crystallization degree is measured by the following procedures. A sample is thinly spread in a petri dish and kept with sulfuric acid aqueous solution of 25% by weight in the desiccator for two days. Calcium fluoride $CaF_2$ is added as an internal standard to the sample thus reaching equilibrium moisture at relative humidity of 81.7% and the sample is provided for X-ray diffraction. Specifically, a measurement sample of 95mg and $CaF_2$ of 5mg are uniformly mixed in a mortar and the mixture is uniformly coated on the sample plate for X-ray crystal analysis at measurement conditions of X-ray tube: Cu, voltage: 40kV, current: 40mA, scan rate: 2°/min., scan step: 0.02°, divergence slit: 1°, dispersion slit: 1°, and luminescence slit: 0.15mm. An obtained X-ray diffraction diagram is smoothed at a smoothing point of 19 to eliminate a background. A crystallization degree is a rate of a peak relative area of respective starch samples to a $CaF_2$ peak area of an X-ray diffraction diagram having treated.

It is advantageous that increase of starch crystallization degree improves less digestibility in terms of nutritive function and controls food deterioration (aging and coagulation of the starch) in terms of property because of small amount of amylose elution due to heat during food processing.

Further, in the less digestible starch obtained by the present producing method, a grain is spherical so that texture in the mouth (roughness and dryness) is improved when it is applied to foods.

With respect to the less digestible starch which is obtained by the present producing method and has the above-described property and shape, functions similar to a dietary fiber (improvement of intestinal environment, control of rise in blood sugar level, and improvement of fat metabolism) are expected. Besides, the less digestible starch is very useful as a mixed material for proving delicious foods in which taste is not lowered nor texture is deteriorated during long storage when it is mixed in foods peculiar to dietary fiber-mixed foods. Therefore, the present invention provides foods containing a starch which has increased crystallization degree and increased RS content obtained by the present producing method. Specific examples of foods are sweets, snack foods, bread, cake, doughnut, bakery products, noodles, cereal, grains, cooked rice foods, fried foods, livestock processed foods, fishery processed foods and others. A mixture amount of the starch of the present invention appropriately changes depending on usage, ordinarily 1 to 50% by weight, particularly 5 to 20% by weight, to a total amount of food.

Example

Hereinafter, although the present invention is explained in more detail by giving examples, it is not limited thereto.

[Examples 1 to 11, and comparison examples 1 to 4]

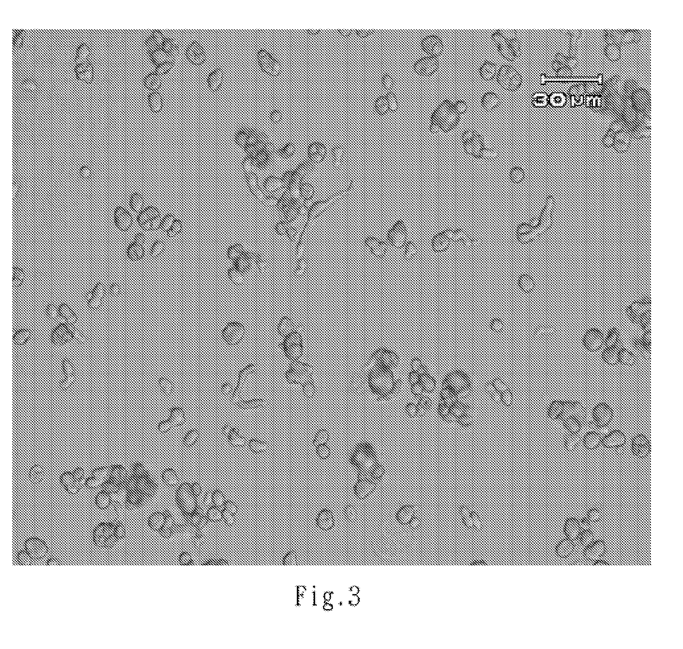

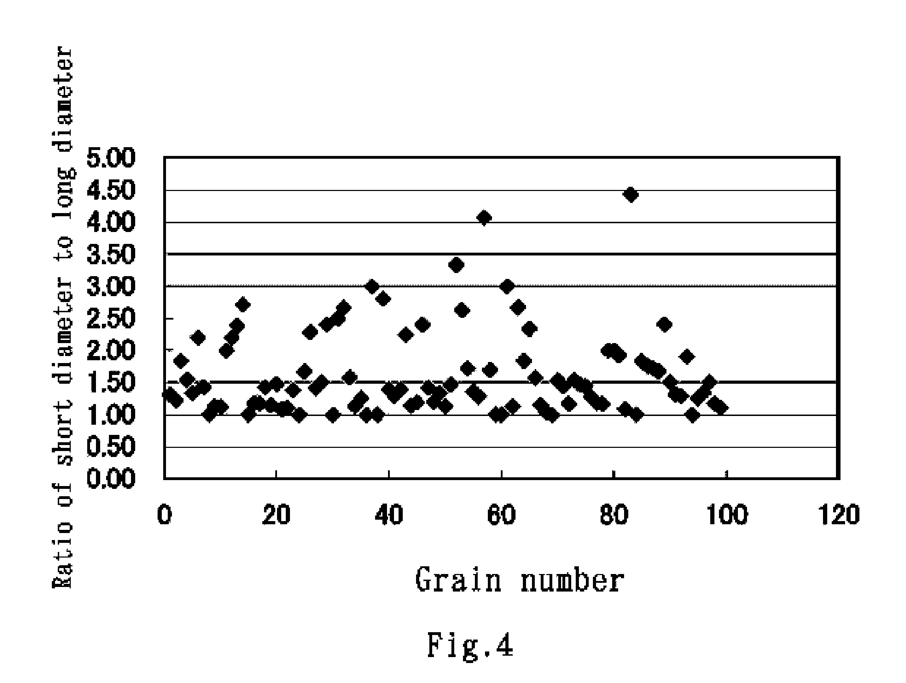

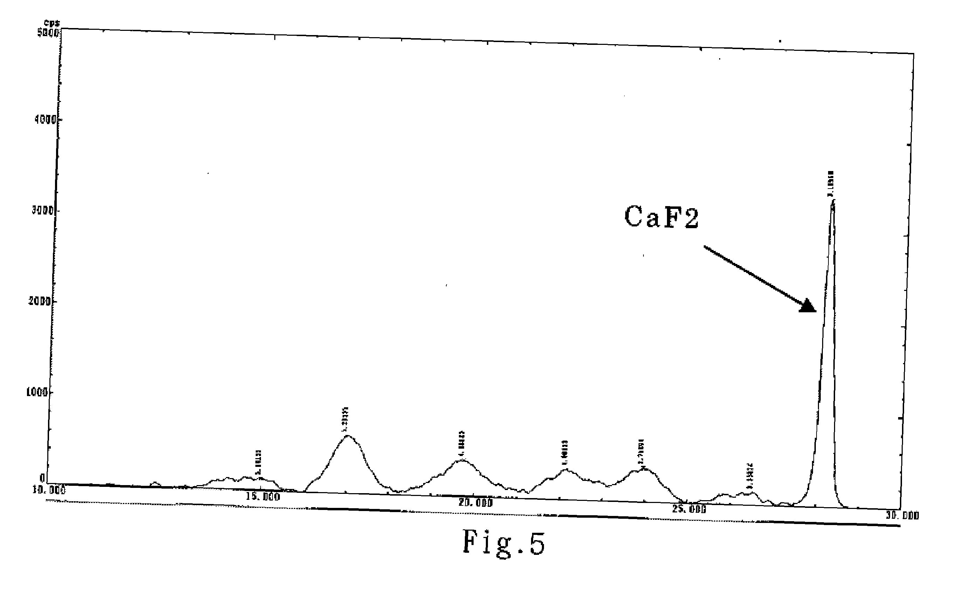

A commercially available high-amylose cornstarch (product name: HS-7, manufactured by J-Oil Mills, Inc., hereinafter abbreviated to HAS) is prepared. HAS amylose content is 82% by weight. HAS micrograph is shown in FIG. 3, a distribution chart of long diameter/short diameter (n=100) is shown in FIG. 4, and an X-ray diffraction result is shown in FIG. 5. In the micrograph of FIG. 3, corded grains particular to HAS are found and grain sizes are not uniform. As shown in the distribution chart of long diameter/short diameter in FIG. 4, the ratio is widely distributed between 1 and 4.5.

Meanwhile, waxy cornstarch (product name: Waxy cornstarch Y, manufactured by J-Oil Mills, Inc., hereinafter abbreviated to WS) is prepared.

RS content of HAS starch is measured as described below in compliance with AOAC official method 2002.02. First, HAS is effected by pancreatic $\alpha$-amylase and amyloglucosidase at 37°C for 16 hours and digestible starch is solubilized and hydrolyzed. Ethanol is added to stop reaction and less digestible starch is collected by a centrifugal machine. Thus collected less digestible starch is dissolved with 2MKOH, neutralized with acetic acid buffer solution, and hydrolyzed into glucose with amyloglucosidase. Thus obtained glucose is measured by glucose oxidase-peroxidase, and RS content of HAS is found 41 %. On the other hand, RS content of WS is measured in a similar way and the content is found 0%.

[Preparation of reaction apparatus]

A batch-type reaction apparatus 20 shown in FIG. 2 is used for hot-water treatment. This reaction apparatus 20 has caps (product name: SS-600-C, manufactured by SWAGELOK) which are removably fit to both ends of a stainless steal pipe 21 (outer diameter: 10mm, inner diameter: 8.2mm, length: 150mm, volume: 8.2cm$^3$).

A salt bath 22 (product name: Thermometer Inspecting Bath CELSIUS600H, manufactured by Thomas Kagaku Co., Ltd.) is used for keeping high temperature of a reaction pipe 21 constant. Mixed salt (melting point: 140°C) having potassium nitrate and sodium nitrite which are mixed at a rate of 1:1 is used for a heat medium inside the salt bath. The reaction apparatus 20 further has a basket (height: 7cm, width: 20cm, depth: 3cm) which is kept in the reaction pipe and an agitator 24 for agitating samples inside the reaction pipe by vertically swinging the basket.

[Calculation of pressure in respective treatment temperature and water preparation amount]

A pressure inside the reaction pipe is assumed equal to a saturated vapor pressure of water. Ratio of respective phases to a volume inside the pipe is expressed by the following formula:

$$V = V_s + V_1 + V_2 \quad (1)$$

[V: reaction pipe volume (cm$^3$), V$_s$: (dried) starch volume (cm$^3$), V$_1$: water phase (liquid phase) volume (cm$^3$), V$_2$: gas phase volume (cm$^3$)]

Further, relation between a (dried) starch preparation amount (g) and a water preparation amount is expressed by the following formula:

$$m_w + m \times w = V_1/v_1 + V_2/(v_2 \times \rho) \quad (2)$$

[$V$, $V_s$, $V_1$ and $V_2$ are same as the above description. $m_w$: water preparation amount (g), m: (dried) starch weight (g), w: water content rate, $v_1$: specific water volume ($cm^3/g$) in water phase, $v_2$: specific water volume ($cm^3/g$) in gas phase, p: water density ($g/cm^3$)]

In the case of starch 0, a water preparation amount V which is allowed to be fed in the reaction pipe is:

$$V_1 = V = 8.2g$$

Therefore, a water amount being a reaction pipe volume at a hot-water treatment temperature becomes $8.2/v_1$ (g). A maximum water phase amount is 80% for allowing a portion of gas phase.

[Sample feeding]

Sample solution is prepared by dissolving the ingredient starch with purified water to make moisture shown in Table 1. Here, the moisture of the ingredient starch are 13.1% for HAS and 12.5% for WS. Such the sample solution of 5.0ml is filled in the reaction pipe 21 shown in FIG. 2 and the reaction pipe is capped.

[Hot-water treatment]

Next, hot-water treatment is carried out by the reaction pipe is submerged in a constant-temperature bath. Specifically, after the reaction pipe 21 fed with the starch and water is placed on a basket 23, the reaction pipe 21 with the basket 23 as a whole is submerged in the salt bath 22 of a temperature shown in Table 1. Further reaction is carried out in conditions shown in Table 1.

During the hot-water treatment, the reaction pipe 21 is vertically swung with the above-described agitator 24 at intervals of 35 times/min. Subsequently, the above-described reaction pipe 21 is drawn from the salt bath 22 and cooled by water.

[Deposit Collection]

Thus water-cooled reaction pipe 21 is shaken well to uniform the contents. The cap is opened, whole amount of the contents of the pipe is transferred to a test tube with a push stick having a chip made by Viton. The contents inside the reaction pipe are discharged and external observation is carried out.

Water is added to the test tube to make volume approximately 45ml. Subsequently it is spun down by centrifugal treatment (3000rpm $\times$ 15 minutes). After centrifugal separation, deposit is collected.

The deposit is depressurized and dried and RS content is measured. The RS content is measured in compliance with AOAC official method 2002.02. A result is shown in Table 1.

[Table 1]

| | Ingredient starch | Moisture (dsb%) | Temperature (°C) | Pressure* | | Time (min.) | RS content (dsb%) |
|---|---|---|---|---|---|---|---|
| | | | | (MPa) | (kg /cm²) | | |
| Example 1 | HAS | 82.5 | 170 | 0.79 | 8.08 | 10 | 50 |
| Example 2 | HAS | 82.5 | 170 | 0.79 | 8.08 | 15 | 60 |
| Example 3 | HAS | 82.5 | 170 | 0.79 | 8.08 | 20 | 59 |
| Example 4 | HAS | 91.3 | 210 | 1.91 | 19.46 | 2 | 64 |
| Example 5 | HAS | 82.5 | 210 | 1.91 | 19.46 | 1.5 | 63 |
| Example 6 | HAS | 82.5 | 210 | 1.91 | 19.46 | 2 | 66 |

(continued)

|  | Ingredient starch | Moisture (dsb%) | Temperature (°C) | Pressure* | | Time (min.) | RS content (dsb%) |
|---|---|---|---|---|---|---|---|
|  |  |  |  | (MPa) | (kg /cm²) |  |  |
| Example 7 | HAS | 65 | 210 | 1.91 | 19.46 | 2 | 57 |
| Example 8 | HAS | 82.5 | 220 | 2.32 | 23.66 | 1 | 54 |
| Example 9 | HAS | 82.5 | 220 | 2.32 | 23.66 | 1.5 | 56 |
| Example 10 | HAS | 82.5 | 230 | 2.80 | 28.53 | 1 | 48 |
| Example 11 | HAS | 82.5 | 250 | 3.98 | 40.56 | 2 | 43 |
| Comparison example 1 | WS | 82.5 | 210 | 1.91 | 19.46 | 1.5 | 0 |
| Comparison example 2 | HAS | 82.5 | 130 | 0.27 | 2.75 | 3 | 31 |
| Comparison example 3 | HAS | 82.5 | 290 | 7.45 | 75.93 | 0.2 | 33 |
| Comparison example 4 | HAS | 82.5 | 290 | 7.45 | 75.93 | 0.6 | Carbonized |

Pressure: Calculation value obtained from temperature

As shown in Table 1, the RS contents of Examples 1 to 9 increase from 41% of the ingredient starch to maximum 66% depending on conditions.

When RS contents of a conventional high-amylose heat-moisture treated product (product name: LODESTAR, manufactured by Nihon Shokuhin Kako Co., Ltd.) is measured according to AOAC official method 2002.02, the RS content is 43%. In other words, it is found that the heat-moisture treated product does not increase less digestible starch (RS) which is evaluated by AOAC official method 2002.02 so much, although it increases total amount of dietary fiber (TDF) which is evaluated by Prosky method, compared with high-amylose cornstarch. On the contrary, RS content of the starch obtained by the present producing method significantly increases compared with the heat-moisture treated product.

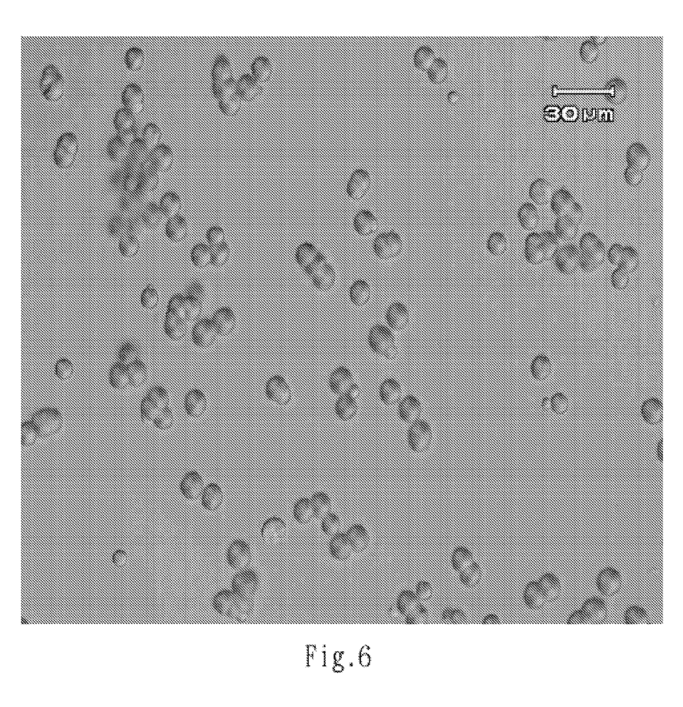

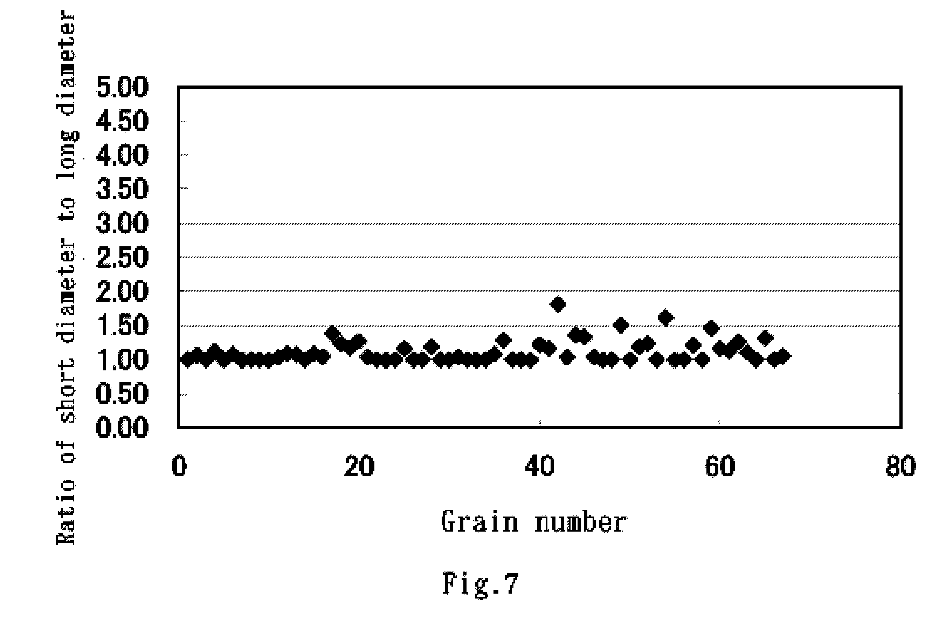

FIG. 6 shows a micrograph of the starch grain obtained according to Example 5. FIG. 7 shows a distribution diagram of long diameter/short diameter (n = 68). A grain of HAS is angular as shown in FIG. 3 while the hot-water treated product according to the present invention is nearly spherical in a grain shape and grain size is substantially uniform (FIG. 6). A ratio of long diameter/short diameter is converged in a range of 1 to 2 and 2.0 or more of a ratio of long diameter/short diameter is 0% (FIG. 7).

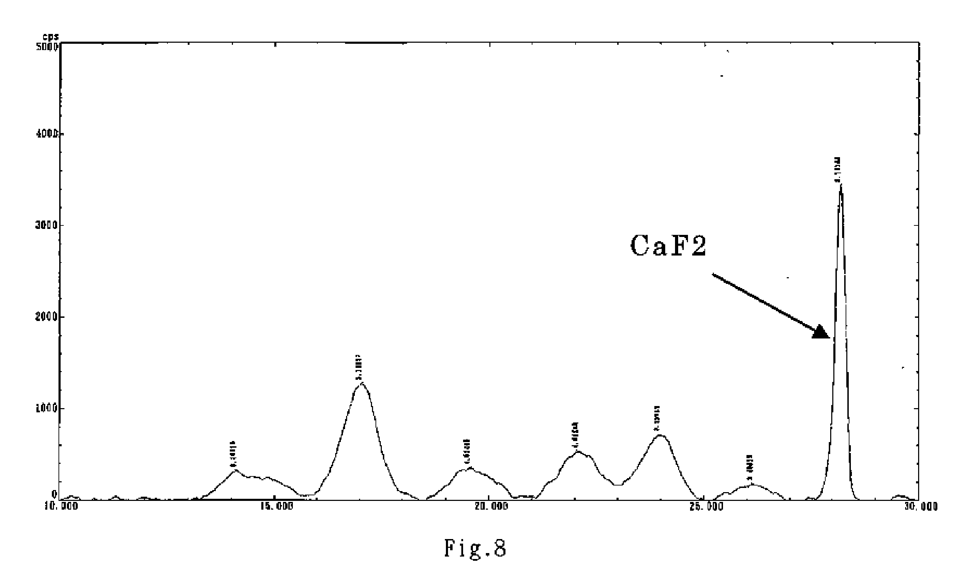

FIG. 8 shows an X-ray diffraction diagram of the hot-water treated product according to Example 5. Based on comparison with X-ray diffraction diagram of the ingredient (FIG. 5), it is found that crystallization proceeds in the hot-water treated starch according to the present invention. Further when crystallization degree is measured by the above-described measurement method, HAS crystallization degree is 11.4% but in the hot-water treated product according to the hot-water treated product of Example 5, the crystallization degree increases to 18.6%.

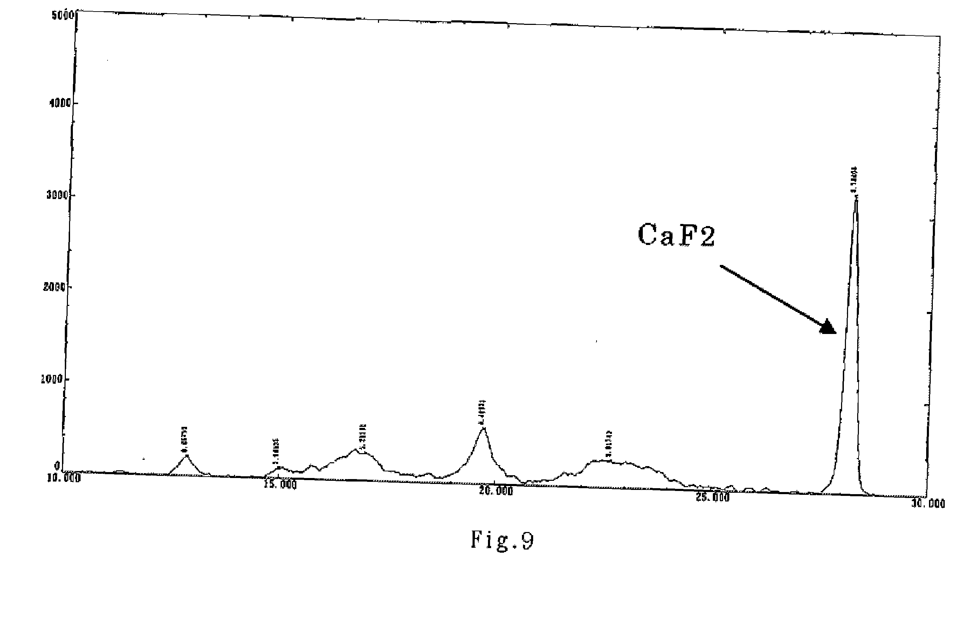

FIG. 9 shows an X-ray diffraction diagram of a conventional high-amylose cornstarch high-moisture treated product (product name: LODESTAR, manufactured by Nihon Shokuhin Kako Co., Ltd.). Based on comparison between FIG. 9 and FIG. 8 (the hot-water treated product according to the present invention), it is found that the hot-water treated product according to the present invention contains more crystalline substance than the heat-moisture treated product. These crystallization degrees are shown together with results of raw cornstarch and raw potato starch in Table 2 for comparison.

[Table 2]

|  | Moisture (%) | Crystallization degree (%) |
|---|---|---|
| HAS (high-amylose cornstarch product) | 18.1 | 11.4 |
| Hot-water treated product of Example 5 | 19.4 | 18.6 |

(continued)

|  | Moisture (%) | Crystallization degree (%) |
|---|---|---|
| Conventional high-amylose cornstarch heat-moisture treated product (Product name: LODESTAR) | 16.3 | 9.3 |
| Raw cornstarch (Reference) | 16.0 | 16.4 |
| Raw potato starch (Reference) | 20.5 | 12.7 |

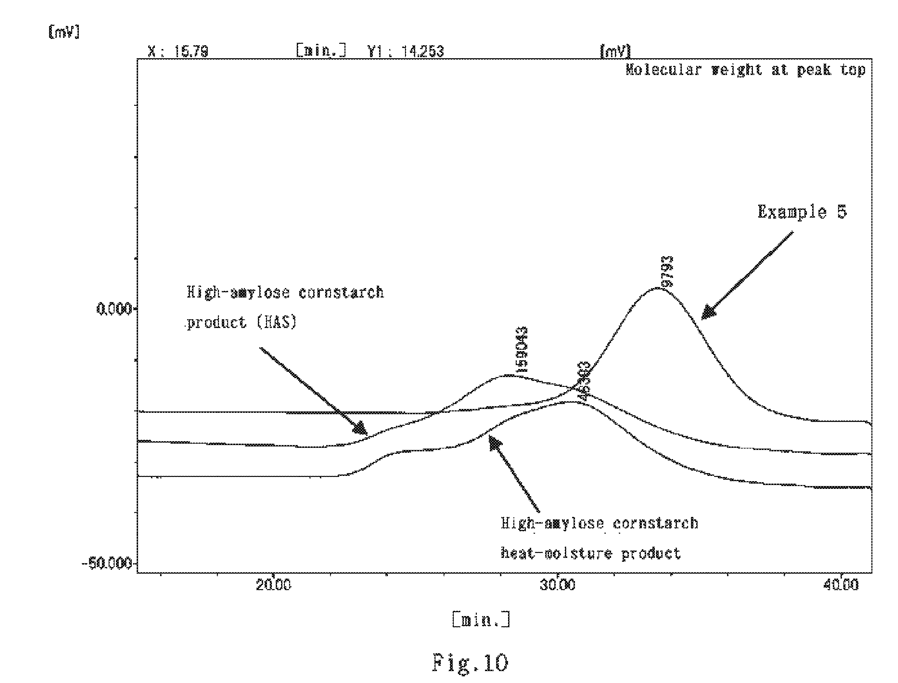

FIG. 10 shows results of GPC measurement among HAS, the hot-water treated product of Example 5 and conventional heat-moisture treated product (Product name: LODESTAR). For measurement, TSKgel manufactured by Tosoh Corporation, $\alpha$-M $\times$ 2 pieces (7.8mm$\varnothing \times$ 30cm) is used for column. Conditions are flow rate of 0.5ml/min., eluant of 5mM $NaNO_3$ in DMSO, sample concentration of 1.0g/L, and column temperature of 40°C. Molecular weight standard of pullulan is used for calculation of molecular weight.

Based on a result of FIG. 10, in the hot-water treated product of the present invention, a molecular weight is considerably small compared with the conventional heat-moisture treated product and HAS, and it is confirmed that a structure is different.

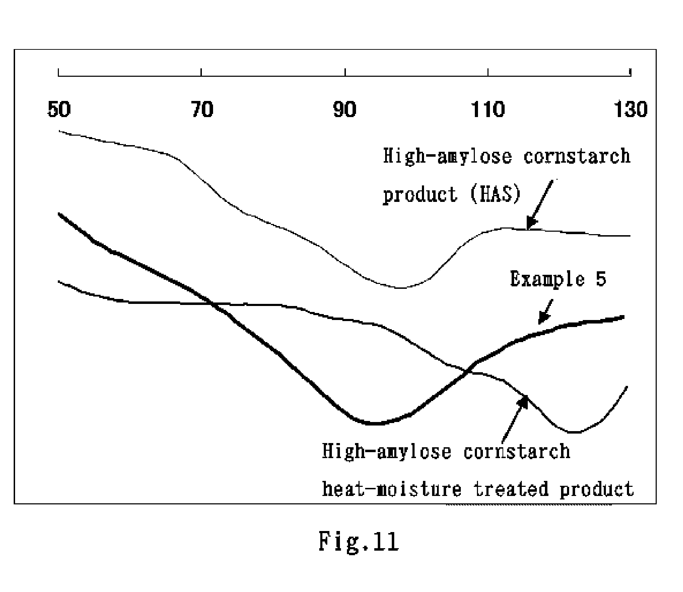

FIG. 11 shows a result of DSC measurement of the hot-water treated product of Example 5 and the conventional heat-moisture treated product (Product name: LODESTAR). DSC 3100S manufactured by MAC Science Co., Ltd. is used for measurement, a sample of 10mg is added in 70$\mu$l alumicell and water is added to make final solid content of 35%. After it is left for one night at a room temperature, temperature is raised to 130°C at 10°C/min. with water as a reference.

FIG. 11 shows an endothermic peak temperature is near HAS with respect to the hot-water treated product of the present invention, whereas the endothermic peak temperature is shifted to a high temperature side with respect to the conventional heat-moisture treated product. Based on comparison with the hot-water treated product of the present invention and HAS, an endothermic peak portion in a low temperature side decreases. Based on this result too, it is confirmed that the hot-water treated product of the present invention is different from the conventional heat-moisture treated product and HAS in a property (gelatinization property) as well as a structure.

*DESCRIPTION OF THE REFERENCE NUMERALS*

10    Hot-water treatment apparatus;
11    Water tank;
12    Water pump;
13    Heater;
14    Ingredient tank;
15    Slurry pump;
16    Heat/pressure resistant hot-water treatment pipe;
17    Cooler;
18    Filter;
19    Back pressure valve;
20    Batch-type reaction apparatus;
21    Pressure/heat resistant pipe;
22    Salt bath;
23    Basket;
24    Agitator; and
A    Starch

**Claims**

1. A method of producing starch having a high content of less digestible starch comprising contacting amylose content starch with hot water at a temperature of 160 to 260°C which has a pressure corresponding to a saturated vapor pressure at that temperature or more.

2. The method of producing starch having a high content of less digestible starch according to claim 1, wherein the starch is high-amylose cornstarch.

3. The method of producing starch having a high content of less digestible starch according to claim 2, wherein a amylose content of the high-amylose cornstarch is 50 to 85% by weight.

4. The method of producing starch having a high content of less digestible starch according to claim 1, wherein contact with hot water is carried out for 0.1 to 60 minutes at a temperature of 170 to 230°C.

5. The method of producing starch having a high content of less digestible starch according to claim 1, wherein the contact with hot water is carried out in a slurry state.

6. A starch obtained by the producing method according to claim 1, wherein the less digestible starch content and a crystallization degree are increased more than those of ingredient starch.

7. The starch having an increased crystallization degree and an increased content of less digestible starch according to claim 6, wherein the less digestible starch content is 50 to 70% by weight of a total starch amount and the crystallization degree is 12 to 30%.

8. The starch having the increased crystallization degree and the increased content of less digestible starch according to claim 6, wherein a rate of those having a ratio between a short diameter and a long diameter of 2.0 or more in terms of a starch grain shape is 5% or less.

9. A food which is mixed with the starch having the increased crystallization degree and the increased content of less digestible starch, according to claim 6.

Fig.1

Fig.2

Fig.3

EP 2 138 514 A1

Fig.4

CaF2

Fig.5

Fig.6

Fig.7

EP 2 138 514 A1

Fig.8

Fig.9

EP 2 138 514 A1

Fig.10

Fig.11

| INTERNATIONAL SEARCH REPORT | International application No. |
|---|---|
| | PCT/JP2008/001528 |

**A. CLASSIFICATION OF SUBJECT MATTER**
*C08B30/12*(2006.01)i, *A23L1/30*(2006.01)i, *C08B30/20*(2006.01)i

According to International Patent Classification (IPC) or to both national classification and IPC

**B. FIELDS SEARCHED**

Minimum documentation searched (classification system followed by classification symbols)
C08B30/12, A23L1/30, C08B30/20

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)
JSTPlus(JDreamII), JMEDPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2006/041851 A1   (TATE & LYLE INGREDIENTS AMERICAS, INC.),<br>20 April, 2006 (20.04.06),<br>Claims; examples<br>& JP 2008-516050 A      & US 2006/0078667 A1<br>& US 2007/0089734 A1   & EP 1802661 A<br>& CA 2583303 A         & NO 20071649 A<br>& KR 10-2007-0083589 A | 6-9<br>1-5 |
| A | JP 2006-320325 A  (National Starch and Chemical Investment Holding Corp.),<br>30 November, 2006 (30.11.06),<br>Full text<br>& US 2006/0263503 A1   & EP 1723853 A2<br>& CA 2546972 A         & NO 20062247 A<br>& KR 10-2006-0119823 A  & CN 1875752 A<br>& NZ 547210 A          & CA 2546972 A1 | 1-9 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>25 June, 2008 (25.06.08) | Date of mailing of the international search report<br>08 July, 2008 (08.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/001528 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 7-252301 A  (Nakano Vinegar Co., Ltd.), 03 October, 1995 (03.10.95), Full text (Family: none) | 1-9 |
| A | JP 11-5802 A  (Nippon Starch Chemical Co., Ltd.), 12 January, 1999 (12.01.99), Full text (Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10195105 B
- JP H09012601 B
- JP 2006320325 A
- JP H08503123 W
- JP H08503123 B
- JP 2005087987 A

**Non-patent literature cited in the description**

- **Kenichiro Kanaya.** Requirement for analyzing dietary fiber. *Journal of Japanese Association for Dietary Fiber Research,* 2006, vol. 10 (2), 113-114
- Science of Dietary Fiber. Asakura Shoten, 148-149